# EUROPÄISCHE PATENTANMELDUNG

(11) **EP 1 541 074 A1**
(43) Veröffentlichungstag der Anmeldung: **15.06.2005**
(21) Anmeldenummer: 04028549.6
(22) Anmeldetag: 02.12.2004
(51) Int. Cl.: A47J 45/06

(54) **Kochgefäss**

(30) Priorität: 12.12.2003 IT mi20032432
(71) Anmelder: BALLARINI PAOLO & FIGLI S.p.A., 46017 Rivarolo Mantovano (MN) (IT)
(72) Erfinder: Garziera, Roberto Vincenzo, 22070 Appiano Gentile (IT)
(74) Vertreter: Mayer, Hans Benno, Dipl.-Ing.

(57) **Zusammenfassung**

Ein Kochgefäß (10), das wenigstens einen Behältnis (11) mit im Wesentlichen zylindrischer Form aufweist, mit wenigstens einer Halterung, die an den Wänden des Kochgefäßes (11) angeordnet ist, und mit wenigstens einem Griff (20), der gelenkig gegenüber der Halterung (30) angeordnet ist und in einfacher Weise in wenigstens zwei Stellungen bewegbar ist, wobei eine Stellung einer angehobenen Lage des Griffes entspricht, in der der Griff radial von den Wänden des Behälters (11) absteht, sowie in eine abgesenkte Lage, in der der Griff längs der Behälterwand angeordnet ist, und dadurch die Möglichkeit geschaffen wird, den Behälter (10) im Inneren eines weiteren Behälters mit entsprechender Form und etwas größeren Abmessungen unterzubringen, mit einer Vorrichtung, die den Griff (20) in der angehobenen Stellung arretiert gegenüber der Halterung (30), die aus wenigstens einem Hebel (50) besteht, der mit dem Griff (20) verbunden ist und gegenüber diesem bewegbar vorgesehen ist.

## Beschreibung

Kochtöpfe bestehen üblicherweise aus einem Behälter, der mit einem oder mehreren Griffen ausgerüstet ist, die sich radial von den Wänden des Behälters erstrecken und fest mit diesen Wänden verbunden sind.

Es tritt häufig auf, dass diese Griffe einer ordnungsgemäßen und platzsparenden Anordnung der Kochgefäße entgegensteht. Dies tritt zum Beispiel während des Verpackens und beim Verschicken des Kochgefäßes oder bei Anordnen desselben in einer Geschirrspülmaschine, in einem Kühlschrank, in Küchenmöbeln oder in Regalen auf.

Ein Nachteil, der beim Vorhandensein von abstehenden Handgriffen in besonders augenscheinlicher Weise auftritt, ist in der fehlenden Stapelbarkeit der Kochtöpfe zu sehen, genauer gesagt, in der Anordnung eines Kochgefäßes im Inneren eines weiteren Kochgefäßes.

Eine Anzahl von Kochtöpfen, die den herkömmlichen kulinarischen Bedürfnissen gerecht werden, besteht üblicherweise aus einer Anzahl von Kochgefäßen, auch Kasserollen genannt, welche entsprechende Form, meist zylindrische Form, aufweisen und unterschiedliche Durchmesser, beginnend mit einem kleinsten Durchmesser, der bis zu einem größten Durchmesser ansteigt, wobei die Durchmesser in ihrer Abmessung zunehmen. Lediglich als Beispiel, welches keine Einschränkung darstellt, kann eine Topfbatterie, die aus einer Anzahl von Kasserollen besteht, einen Durchmesser von 120, 150, 180, 210, 240, 280 und 320 mm aufweisen.

Üblicherweise sind diese Kochtöpfe mit zwei Griffen versehen, die radial abstehen und dies mit Abmessungen zum Beispiel zwischen 40 und 80 mm.

Einige Kochtöpfe, welche die Topfbatterie bilden, könnten mit zunehmenden Abmessungen im Innenraum des folgenden Kochtopfes angeordnet sein, wenn man dabei ausschließlich die Abmessungen des Kochtopfes berücksichtigen würde; das Ineinanderstapeln ist aber nicht möglich, da jeder Kochtopf mit abstehenden Handgriffen versehen ist.

Eine bekannte Lösung, die es ermöglicht, die genannten Nachteile zu vermeiden, besteht darin, das Kochgefäß mit abnehmbaren Griffen zu versehen. Diese Lösung weist einige Nachteile auf: Das Anbringen der Griffe erfolgt häufig in wenig zuverlässiger Weise. Die Aufnahmen sowie die Griffe weisen ein erhebliches Bauvolumen auf, es ist erforderlich, die Kochgefäße und die Handgriffe in unterschiedlicher Weise zu handhaben.

Eine weitere Lösung, die dazu dient, die Nachteile der erheblichen Abmessungen aufgrund von abstehenden Griffen zu lösen, besteht darin, das Kochgefäß mit Griffe zu versehen, die gelenkig angebracht sind. Diese Griffe bestehen üblicherweise aus Vorrichtungen aus Metall, die mit ihren Enden über Scharniere an der Kochgefäßwand befestigt sind; diese sind unter Wirkung des eigenen Gewichtes absenkbar und es ist notwendig, diese Griffe anzuheben, sofern man diese ergreifen will. Diese Lösung findet häufig Verwendung zum Beispiel bei Brätern für eine Backröhre, die rechteckige Form aufweisen. Diese bekannte Ausführungsform ist aber in der Handhabung sehr umständlich und unsicher, besonders bei Verwendung auf dem Gebiete der gewerblich betriebenen Küchen.

Aufgabe der vorstehenden Erfindung ist es, die vorher angeführten Nachteile zu vermeiden, besonders den Nachteil, der darin besteht, ein Kochgefäß zu schaffen, das mit einem oder zwei Griffen versehen ist, welche dauerhaft eine angehobene Stellung einnehmen können, in der sich die Griffe radial von den Wänden des Gefäßes erstrecken und somit eine bequeme und sichere Handhabung erlauben, und ferner eine abgesenkte Lage einnehmen können, in der die Griffe möglichst nahe an der Gefäßwand angeordnet sind und wesentlich den Platzbedarf vermindern und des weiteren ermöglichen, ein erstes Kochgefäß im Inneren eines weiteren Kochgefäßes anzuordnen, welches identische Form aufweist, aber Abmessungen hat, die geringfügig größer sind als die des auszunehmenden Kochgefäßes.

Eine weitere Aufgabe der vorstehenden Erfindung ist darin zu sehen, ein Kochgefäß zu schaffen, das über ein oder zwei gelenkig angeordnete Griffe verfügt, die einfach in ihrem Aufbau sind und einen geringen Kostenaufwand mit sich bringen.

Diese und weitere Aufgaben der vorstehenden Erfindung werden durch ein Kochgefäß gemäß den Merkmalen des Anspruches 1 gelöst.

Weitere Merkmale sind den folgenden Unteransprüchen zu entnehmen.

Die Merkmale und Vorteile eines Kochgefäßes gemäß der vorstehenden Erfindung werden nun genauer beschrieben und in vereinfachter Weise in den schematisch aufgebauten Zeichnungen dargestellt. Es zeigen:
Figur 1 in perspektivischer Darstellung ein Kochgefäß gemäß der Erfindung mit zwei Griffen, wobei einer der Griffe in angehobener Stellung und der andere Griff in abgesenkter Stellung dargestellt ist.
Figur 2 in einer Draufsicht das erfindungsgemäß ausgebildetes Kochgefäß, in welches ein entsprechendes Kochgefäß mit kleineren Abmessungen eingesetzt ist.
Figur 3 zeigt im Schnitt entlang der Mittellinie ein Kochgefäß, in das ein Kochgefäß, welches nicht im Schnitt dargestellt ist und etwas kleinere Abmessungen aufweist, eingesetzt ist.
Figur 4 zeigt eine Baugruppe Halterung-Griff gemäß der vorstehenden Erfindung im Schnitt entlang einer Linie, die im geringen Abstand von der Mittellinie angeordnet ist.
Figur 5 zeigt verschiedene perspektivische Darstellungen einer möglichen Ausführungsform einer Lagerung für ein Kochgefäß gemäß der vorstehenden Erfindung.
Figur 6 zeigt in perspektivischer Darstellung eine mögliche Ausführungsform eines erfindungsgemäßen Griffes für ein Kochgefäß.
Figur 7 zeigt in perspektivischer Darstellung eine mögliche Ausführungsform eines Arretierhebels für ein Kochgefäß gemäß der vorstehenden Erfindung.
Figur 8 zeigt in perspektivischer Darstellung und in einem Schnitt entlang einer Mittellinie die Baueinheit, bestehend aus einer Lagerung 5 mit einem Griff gemäß Figur 6 und einem Hebel 7 mit dem Griff in angehobener Stellung.
Figur 9 zeigt einen Schnitt entlang der Achse des Scharnierteiles der Baueinheit gemäß Figur 8 mit dem Griff in abgesenkter Lage.
Figur 10 zeigt in perspektivischer Darstellung die Baueinheit bestehend aus einem Griff gemäß Figur 6 und einem Hebel gemäß Figur 7, der in dieser Darstellung leicht ausgezogen dargestellt ist.

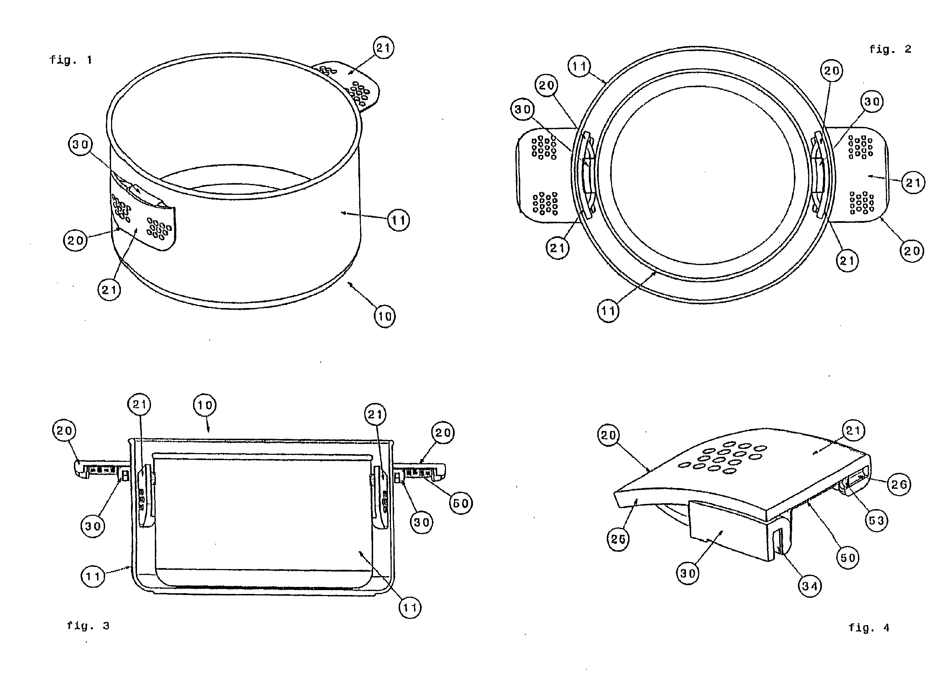

Unter Bezugnahme auf die Figuren 1 bis 10 wird ein Kochgefäß 10 beschrieben, welches aus einem Gefäß 11 besteht, das im Wesentlichen Zylinderform aufweist.

An den Wänden des Kochgefäßes 10 sind in entsprechender Höhenlage zwei Halterungen 30 angeordnet, die in sich diametral gegenüberliegender Stellung befestigt sind.

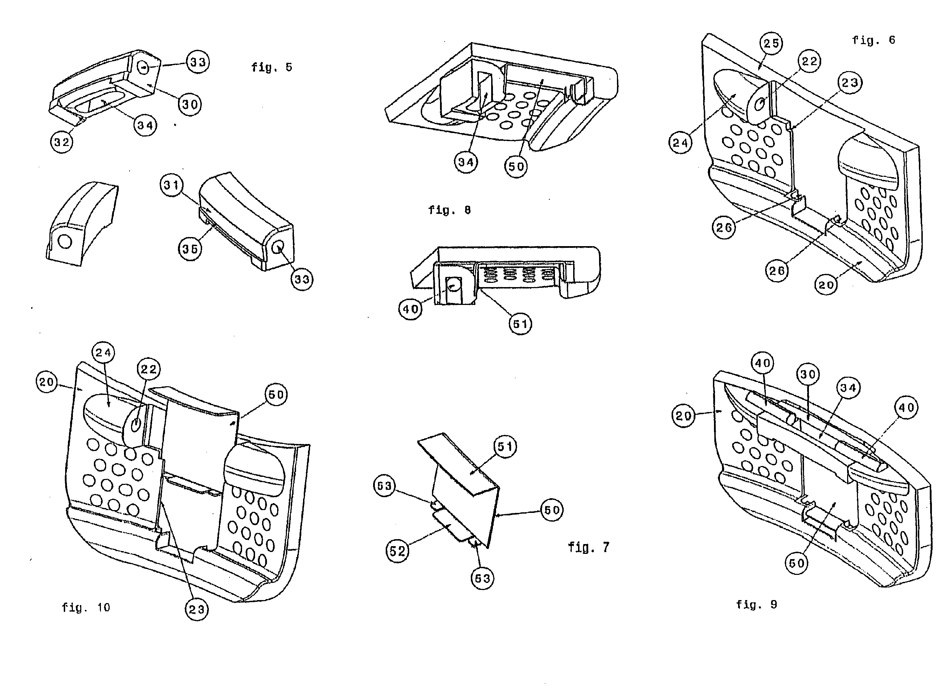

Wie den Figuren 5 und 9 zu entnehmen ist, weisen diese Lagerungen zwei Bohrungen 33, eine Nut 34, eine Ausnehmung 31 und einen Hohlraum 32 auf.

Die Griffe 20 sind über die Bohrungen 22, die in Verdickungen 24 eingearbeitet sind, mit den Halterungen 30 über Stifte 40, die in Bohrungen 33 eingesetzt sind, verbunden. Die Nute 34 erleichtert das Einsetzen der Stifte 40.

Wie den Figuren 2 und 3 zu entnehmen ist, nimmt die Baueinheit die Griffe 20 auf, die in abgesenkter Stellung an Halterungen 30 am Gefäß 11 befestigt sind. Die Halterung wird in vorteilhafter Weise von einer zylindrischen Fläche begrenzt, die konzentrisch zum Gefäß 11 ist und mit der Oberfläche 21 übereinstimmt, wodurch der Platzbedarf weiterhin vermindert wird und die Möglichkeit eröffnet wird, den Behälter 10 im Inneren eines weiteren Behälters unterzubringen, der einen etwas größeren Durchmesser aufweist.

Es ist einleuchtend, dass die Halterungen 30, sofern diese an den Wänden des Gefäßes 11 befestigt sind und die Montage der Griffe 20 erfolgt ist, durch die Griffe gegenüber der Wand des Gefäßes eine beschränkte Schwenkbewegung um die Achse der Stifte 40 durchführbar ist. Die Griffe 20 können daher eine abgesenkte Stellung einnehmen, in der sie längs der Wand des Kochgefäßes 11 angeordnet sind, sowie eine angehobene Stellung, in der sie radial von den Behälterwänden abstehen.

Wie in den Figuren 4 und 8 dargestellt ist, erlaubt eine Vorrichtung, bestehend z.B. aus dem Hebel 50, ein Arretieren der Griffe 20 in der angehobenen Stellung, wodurch die Griffe in ihrer Lage stabilisiert werden und ferner vermieden wird, dass sich die Griffe in unbeabsichtigter Weise in ihrer Lage verändern, z.B. dann, wenn das Kochgefäß geneigt wird, um z.B. seinen Inhalt auszugießen.

In einer bevorzugten Ausführungsform, die in den Figuren 4, 7 und 8 dargestellt ist, besteht die Vorrichtung aus einem metallischen Hebel 50, der z.B. durch Stanzen oder Pressen herstellbar ist, und kleine Zungen 51, 52 und 53 aufweist, die in die Nute 23, die im Griff 20 vorgesehen ist, einsetzbar ist, wie dies in Figur 10 dargestellt. Das Einfügen der kleinen Zunge erfolgt mit leichtem Spiel, um ein Verschieben gegenüber dem Griff 20 zu ermöglichen.

Federn mit gleichbleibender Federkonstante, die in die Ausnehmung 26 eingesetzt sind, beeinflussen die Bewegung des Hebels 50, da sie auf die kleinen Zungen 53 einwirken, und den kleinen Hebel 50 in Richtung der Aufnahme 30 rücken.

Wie in Figur 8 dargestellt ist, wird durch Anheben des Griffes 20 eine Stellung erreicht, in der der kleine Hebel 50 in die Ausnehmung 31 eindringt, welche in die Halterungen 30 eingearbeitet sind, und durch Anliegen auf den Verdickungen 35 wird ein Arretieren des Griffes 20 in seiner Gebrauchslage, in der sich der Griff im Wesentlichen parallel zum Boden des Kochgefäßes 11 befindet, erreicht.

Zum Entriegeln des Griffes 20 ist es notwendig, auf den kleinen Hebel 50 einen Druck nach außen auszuüben (d.h. radial in Entfernung gegenüber dem Kochgefäß 11, indem auf die kleine Zunge 52 eingewirkt wird. Im Anschluss daran, erfolgt ein Verschränken des Griffes nach unten. Eine Ausnehmung 32, die in die Halterung 30 eingearbeitet ist, nimmt die kleine Zunge 51 dann auf, wenn der Griff in abgesenkter Lage angeordnet ist und in dieser Lage arretiert wird.

Für das erfindungsgemäße Kochgefäß, das im Vorangegangen beschrieben wurde, können die Halterungen z.B. einstückig als Gussteil oder als Pressteil aus Metall hergestellt werden und die Griffe können aus thermoplastischem Kunststoff, z.B. Phenolharz bestehen.

Es ist naheliegend, dass die Fertigung des Kochgefäßes gemäß der vorstehenden Erfindung, wie im Vorangegangenen dargestellt, lediglich als Ausführungsbeispiel zu bewerten ist. Der vorangegangenen Beschreibung können die Merkmale des Kochgefäßes mit den entsprechenden Vorteilen entnommen werden. Diese sind:
- Verminderte Abmessungen
- Möglichkeit ein Kochgefäß im Inneren eines anderen Gefäßes unterzubringen, wobei dieses zweite Gefäß gleiche Form und leicht größere Abmessungen aufweist;
- zuverlässiger Einsatz der Handgriffe;
- einfache Bauweise und einfache Montagemöglichkeit.

Es ist naheliegend, dass das Kochgefäß, das die beschriebenen Merkmale aufweist, bauliche Abänderungen erfahren kann, wobei diese gesamthaft unter den beschriebenen Erfindungsgedanken fallen; desweiteren besteht die Möglichkeit, alle beschriebenen dargestellten Bauteile durch äquivalente Bauteile zu ersetzen.

Desweiteren können die eingesetzten Materialen sowie die Bauformen und Abmessungen beliebig gewählt werden, entsprechend den technischen Voraussetzungen.

Der Schutzumfang der Erfindung wird durch die folgenden Patentansprüche definiert.

## Patentansprüche

1. Kochgefäß (10), bestehend aus wenigstens einem Gefäß (11), mit im Wesentlichen zylindrischer Form, mit wenigstens einer Halterung (30), die an den Wänden des Kochgefäßes (11) befestigt ist, mit wenigstens einem Griff (20), der mit dieser Halterung (30) über eine Gelenkverbindung verbunden ist und in wenigstens zwei Stellungen verschwenkbar ist, und zwar in eine Stellung, in der der Griff radial von den Wänden des Kochgefäßes (11) abstehen, sowie in eine abgesenkte Lage, in der der Griff längs der Wände des Kochgefäßes angeordnet ist, mit der Möglichkeit, das Kochgefäß (10) im Inneren eines weiteren Kochgefäßes mit etwas größeren Abmessungen unterzubringen, und mit einer Vorrichtung, die den Griff (20) in seiner angehobenen Stellung arretiert, unter Einwirkung auf die Halterung (30), bestehend aus wenigstens einem Hebel (50), der mit dem Griff (20) verbunden ist und gegenüber diesem bewegbar angeordnet ist.

2. Kochgefäß, nach Patentanspruch 1, **dadurch gekennzeichnet, dass** der Griff (20) ein Federmittel aufweist, welches auf den Hebel (50) einwirkt.

3. Kochgefäß, nach Patentanspruch 1, in beidem die Halterung (30) einstückig als gepresstes oder gegossenes Metallbauteil ausgeführt sind und der Griff (20) aus thermoplastischen Kunststoff besteht und die kleine Zunge (50) aus einer Metallplatine besteht.

4. Kochgefäß, nach Patentanspruch 1, in dem die Halterung (30) Ausnehmungen (31, 32) aufweist, welche den Hebel (50) aufnehmen, wenn der Griff (20) in angehobener oder abgesenkter Lage angeordnet ist.
